# EUROPEAN PATENT APPLICATION

(11) **EP 2 665 084 A2**
(43) Date of publication of application: **20.11.2013**
(21) Application number: 13168399.7
(22) Date of filing: 18.05.2013
(51) Int. Cl.: H01J 49/02

(54) **Improvements in and relating to the measurement of ions**

(30) Priority: 18.05.2012 GB 201208843
(71) Applicant: Fasmatech Science And Technology SA, 190 14 Attika (GR)
(72) Inventor: Raptakis, Emmanuel, 153 10 Attika (GR); Papanastasiou, Dimitris, 15310 Attika (GR)
(74) Representative: Fearnside, Andrew Simon

(57) **Abstract**

A method of detecting a position of an ion(s) comprising providing a fluorescent said ion(s) or attaching a fluorescent agent to said ion(s) to provide a tagged ion(s), providing an ion conduit for directing ions along a path and a detection area in communication with the ion conduit comprising a light sheet extending across a said path, releasing said ion(s) or tagged ion(s) into the ion conduit to move therealong towards the detection area, and detecting fluorescent light from the fluorescent ion(s) or the tagged ion(s) excited by interaction with the light sheet, thereby to detect a position of the ion(s) as being a position of or within the light sheet.

## Description

### FIELD

The present disclosure relates to mass spectrometer and ion mobility type equipment, components and methods, and in particular, though not exclusively, to ion detectors/detection used therein capable of detecting particles with high mass and size.

### BACKGROUND

Mass spectrometry (MS) and ion mobility spectrometry are analytical tools used for quantitative elemental analysis of samples to measure the mass and size of ionised particles.

In an effort to identify the nature of certain molecules in a given sample, a spectrometer may be used. Spectrometers cause sourced molecules or molecular clusters present in a sample to become ionized. The ionized molecules can consequently be treated by a mass analyzer device which causes unlike ionized analyte particles (or simply, ion analytes) to separate in space and/or time due to their relative difference in mass or size. In turn, a separate detector device in the mass spectrometer is able to draw a mass and/or ion mobility spectrum based on this result.

A mass spectrum is useful to derive information about the masses and in some cases the quantities of the various analyte particles that make up the sample.

Similarly, an ion mobility spectrum provides information about the collisional cross-section of analyte species. From this cross-section, one can infer a geometrical size, confirmation and/or state of the various analyte particles. Some mass and mobility spectrometers perform both forms of detection from which to draw inferences about the molecules, proteins, or particles generally under analysis.

There are a number of known ionization systems for analyzing analyte ions in mass spectrometry as well as ion mobility spectrometry. Known methodologies of such systems include Atmospheric Pressure Matrix Assisted Laser Desorption Ionization (AP-MALDI), Atmospheric Pressure Photoionization (APPI), Electrospray Ionization (ESI), Atmospheric Pressure Chemical Ionization (APCI), Inductively Coupled Plasma (ICP), radioactive ion sources, Laser Ablation (LA), and high vacuum Matrix Assisted Laser Desorption and Ionization (MALDI). Using these methodologies, it's been possible to desorb and ionize very large molecular species or clusters which are characterized by particles whose individual masses exceed 1,000,000 Da.

Once generated, analyte ions are separated in time and/or space based on the properties of the chosen analytical technology. Typically, the analyzer section of a mass spectrometer is maintained at high vacuum levels from 10⁻⁴ Torr to 10⁻⁸ Torr.

In an ion mobility analyzer, pressure is higher (e.g., 10³ Torr to 10⁻² Torr) which can cause analyte ions to multiply collide with surrounding gas molecules (buffer gas). In this case analyte ions are found within an accelerating electrical field. The interaction of the electrical field and the multiple collisions result to analyte ions acquiring a terminal velocity. Terminal velocity is primarily dependent on electrical field strength, charge state, cross-section (size) of analyte ions, buffer gas pressure and buffer gas type. Ultimately unlike ion analytes separate in time and space, analyte ions are then directed to a detection stage where relative position as a function of time and space is established from which it is possible to infer respective cross-sections.

Ion detection is a critical aspect of mass spectrometric and ion mobility apparatus.

Ion detectors are categorised in several ways. One such way is in terms of the process methodology employed (e.g., multiple stage electron multiplier, multichannel plates, faraday caps, cryogenic detectors, and the like). Another way is on the basis of the target ions being analyzed or detected (e.g., small ions, high energy ions, large ions, etc.). Another way is on the basis of the pressure range in which the detector is said to operate or what happens to the measured ion beam (destructive versus non-destructive detectors).

Early ion detectors made determinations based on detection of an ion by recording its physical trace on special surfaces such asphotographic plates. Faraday cups were later introduced that detected charges deposited on a conductive surface as a way to infer the presence of specific ions. Such early techniques were not providing high current signals even for cases of small, highly energetic ions, which characteristically are easier to inferentially detect, thus limiting sensitivity of the respective spectrometers.

Modern detectors used in current mass spectrometry utilize a conversion dynode (as a separate component or as part of a front-end of the detector) which converts incident ions into electrons. In a next stage of processing, multistage amplification of the secondary electrons is performed to amplify single-ion events to a measurable current level. It is possible with the use of discrete dynode electron multipliers, and/or multichannel plates or single channel multipliers to achieve considerable amplification (as high as >10³-10⁶).

Hybrid-type detection systems include a scintillator stage coupled after the first stage amplification described above to transform ion-converted electrons into photons. A photomultiplier is then used to detect the photons. One such hybrid system is known as the Daly detector and is primarily used to post-accelerate ions onto an off-axis pad and to then accelerate secondary electrons onto a scintillator opposite the pad.

Some Daly-type detector systems electrically decouple ion-to-electrons conversion from photon detection altogether. In this way, while ion detection may occur at a very high floating voltage, the voltage potential of a photomultiplier anode is maintained at near zero ground potential.

Cryogenic detectors, another type of detector system, detect particle arrivals resulting from the solid state excitation energy deposited on an ultra-cold surface by impinging ions. In this regard, cryogenic detectors are energy detectors capable of detecting ions (and neutrals) without the need to generate secondary electrons.

More recent approaches are those employed by photodiode-like devices which perform direct detection of ion arrivals on room temperature semiconductor surfaces. The basic principle is to detect the presence of electron-hole pair formed at the impact of an energetic ion. One drawback of such devices is that they are limited to relatively high energy ion detection (>1keV/amu) type applications.

Image current detectors provide yet another detection methodology. Such devices detect the presence of ions based on the fact that ion packets -- flying in close proximity to a conductorgenerate an image current in the conductor. This image current is capable of being subsequently amplified by appropriate electronics. Acquired signals can be processed further and reveal the mass or mobility of analyte ions.

Image current detectors are uniquely non-destructive in that an ion beam may be measured and detected without splatting ions on any surface, as with many conventional systems.

Unfortunately, image currents generated by image current detectors are very low often requiring repeated measurements until an acceptable signal-to-noise ratio is achieved. For this reason, image current detectors are typically used in applications involving ions capable of being trapped within a periodic motion trajectory, e.g., a Fourier Transform Ion Cyclotron Radiation mass spectrometer or an Orbitrap mass spectrometer.

With the exception of image current detectors, conventional systems require the analyte ions, as previously explained, to strike/ impact against an ion-destroying surface which ultimately renders the ions themselves unavailable for further measurements.

Non-destructive detectors, such as image current detectors, when employed as part of a mass analyzer capable of engaging ions in periodic motion, have the advantage of measuring the same ions many times over which inherently does improves the signal-to-noise ratio. Unfortunately, for non-periodic type ion detection and measurement, particularly where high sensitivity is very important to the analysis, current non-destructive detector systems are not viable.

Image current detectors also tend to require a minimum amount of fundamental charge (i.e,, the charge of a single electron or a single proton) to register a signal. This minimum amount of fundamental charge is typically around 10 to 30 charges in total. Conventional image current detectors are unable to detect charge ions below the minimum amount of fundamental charge, such as that of single or low charge ions.

Practical applications of many mass spectrometer detectors that utilize collisions of the incoming analyte ions to generate and multiply secondary electrons (using for example secondary electron multipliers and channel plates) are those involving detection of low to moderate values of mass-to-charge (m/z) ratio (a few Th up to ∼10⁶Th). The practical limitation stems from the fact that for adequate secondary electron generation efficiency very high velocity of impact is required. To detect high m/z (e.g., 20,000 Th to 1,000,000 Th) conventional mass spectrometers must accelerate ions to potentials in excess of 20,000V or 30,000V. Such high potential requirements increase design complexity and cost and are generally prone with decreased operating reliability.

For applications requiring analysis of high mass particles, where secondary electron multipliers or channel plates are employed, it is common to introduce a post-acceleration stage that increases the velocity of larger ions prior to impact on the detector medium. This approach however further increases design complexity and cost as well as introduces problems with peak broadening, which attributes to a loss of resolution of measurement.

Cryogenic detectors, while capable of detecting low velocity particles, they suffer from high cost, are typically very small (a few tens microns square per detector) and require a complex and expensive cryogenic stage and a steady supply of liquid nitrogen.

For much larger ionized particles, e.g. aerosol particles or even whole viruses, further known techniques are used to detect a charged species. Such techniques include the detection of light scattered by very large ions using a light source and a photon-multiplier. In one solution, a very large ion (>10⁸Da) is electro-sprayed into a quadrupole ion trap and ejected using resonant ejection. The ejected ion intercepts a laser beam set adjacent to the ion trap exit. The large size particles scatter enough light to register a signal on a photomultiplier set at an appropriate observation point. With this approach it is theoretically possible to achieve single particle measurements; m/z can be determined by the ion ejection properties of the ion trap when the ions are detected.

Another related theoretical approach, which uses light scattering to determine ions passing through a point in space, employs a FAIMS differential mobility analyzer coupled with a light scattering detector to detect ions passing through a differential mobility filter. As a practical matter, light scattering efficiency for small particles is very low with such devices. When the target particles have a size of approximately 1-100nm (typical size for a protein or protein complex) Raleigh scattering displays a very low probability for light scattering even for short non-ionizing light wavelengths (300-400nm). In practical terms, it would require a very high number of particles to register a signal, which makes the light scattering approach impractical for modern, high sensitivity mass spectrometric and ion mobility instrumentation.

Another practical limitation of the aforementioned ion detectors is the requirement to operate at high vacuum (pressure <10⁻³torr, preferably <10⁻⁶torr). This limitation makes them incompatible with typical ion mobility spectrometer systems where higher pressures are typically required. To overcome this limitation, ion mobility spectroscopy systems employ faraday caps connected to very high electronic amplification stages; such system will limit the shortest measurable peak to several tens or hundreds microseconds. By contrast, state of the art electron multipliers measure peaks of several nanoseconds.

What is needed, therefore, is an apparatus and method, capable of detecting high mass ions with high efficiency which overcomes the drawbacks described above.

### BRIEF DESCRIPTION

The present disclosure relates to mass spectrometers and ion mobility spectrometers and methods for utilizing them. The invention may provide, desirably, an efficient detection of ion species (e.g. large size ionic species) by attaching fluorescent agents to such species and utilizing light (e.g. high intensity light) and appropriate optics to define a spatially extended detection area or plane and means to detect fluorescence photons emanating therefrom, preferably with high efficiency. In an exemplary embodiment, a mass or ion mobility analyzer may be utilized to separate fluorescent ionic species in space or time, the ionic species may absorb and re-emit photons as they transverse the detection area/plane. The photons may be directed by optical means to a photon detector which in turn gives an electrical signal that may be used to define a time and/or position or position and time of intersection of ionic species with the detection area/plane.

The invention may include generating drifting ions separated in time and/or space according to their ion characteristics (e.g. charge to mass ratio, collision cross section etc.), causing the drifting ions to drift through one or more light sheets, and detecting light from the drifting ions which results from the interaction of the drifting ions with the light sheet. The time of detection may be determined or calculated relative to a predetermined start time of the drifting ion generation. The spatial separation between a reference location in the path of the drifting ions, and the location of the light sheet may be predetermined. The mass or cross-section of ions may be determined using these parameters. The detected light may be scattered light which results from light within the light sheet scattering from an ion(s) whilst within the light sheet. The light may most preferably include emitted light from an ion(s) which results from fluorescence generated within the ion by absorption of light from the light sheet by an ion(s) whilst within the light sheet. The generation of drifting ions may be by use of a time-of-flight analyzer or methodology. The ions may be prepared with fluorescent markers, substances or components attached to them which are responsive to the light of the light sheet to fluoresce. The sheet of light may be arranged such that the direction of drift of the drifting ions is transverse to the plane of the sheet and most preferably substantially perpendicular. This methodology may be non-destructive of the detected ions and this enables multiple detection events to be performed in embodiments where multiple light sheets (and/or multiple passes through a given light sheet) are performed. The ability to perform multiple detections permits greater accuracy in final results by virtue of improving the detection statistics.

The present invention may include the derivatization of ions such as macromolecular ions prior to mass analysis using mass spectrometry and ion mobility platforms or combinations of both. Preferably, the derivatization of ions, such as macromolecular ions, is performed with fluorescent chemical reagents. Such fluorophores are highly responsive to light and the absorption/emission of light radiation over narrow wavelength bands occurs with high efficiency. Derivatization of large biomolecules or macromolecular assemblies may be accomplished by attaching fluorophores to specific sites, for example specific amino acids in cases where proteins are the target species for mass and/or ion mobility analysis.

The derivatized molecular species may be ionized using "soft" ionization methods, for example Matrix-Assisted Laser Desorption Ionization (MALDI) or Electrospray Ionization (ESI) or variations of the above to prevent metastable decay or dissociation of non-covalent complexes. It is also desirable to use scaffolding agents chemically modified to incorporate fluorophores.

The method for ion separation may preferably comprise accelerating ions to a terminal velocity followed by injection into a drift region where separation is accomplished either by differences in mass-to-charge (m/z) ratio or by differences in cross section. The invention may provide a device capable of determining the position and time of molecular species or other particles found in the gas phase by means of light scattering or light fluorescence and uses the information to determine mass or mobility of such molecular species or particles. The invention may provide a device comprising an ion source, a drift region where ions separate in time and/or space and a detection apparatus which utilises a light source and light detection where the light source defines the detection position and ion detection is carried out by observing light scattering or fluorescence.

The invention may provide a method of detecting a position of an ion(s), the method comprising: providing a fluorescent said ion(s) or attaching a fluorescent agent to said ion(s) to provide a tagged ion(s), providing an ion conduit for directing ions along a path and a detection area in communication with the ion conduit comprising a light sheet extending across a said path, releasing said ion(s) or tagged ion(s) into the ion conduit to move therealong towards the detection area, detecting fluorescent light from the fluorescent ion(s) or the tagged ion(s) excited by interaction with the light sheet, thereby to detect a position of the ion(s) as being a position of or within the light sheet.

The method may include releasing different said fluorescent ions or tagged ions into the ion conduit; causing physically different ions move therealong at different respective speeds according to their respective mass and/or size thereby to separate different ions within the drift tube accordingly; detecting fluorescent light from said different fluorescent ions or tagged ions at different times; and, determining physical differences between said different ions according to said different times.

The invention may provide an apparatus for detecting a position of an ion(s) comprising: an ion conduit part for directing ions along a path; a detection part including a detection area in communication with the ion conduit and arranged to form a light sheet extending across a said path for detecting fluorescent light from fluorescent ion(s) or ion(s) tagged with fluorescent agents excited by interaction with the light sheet, thereby to detect a position of the ion(s) as being a position of or within the light sheet; an ion source part for releasing fluorescent ion(s) or tagged ion(s) into the ion conduit to move therealong towards the detection area.

The ion conduit part is preferably arranged to cause physically different ions move therealong at different respective speeds according to their respective mass and/or size thereby to separate different ions within the drift tube accordingly; and said detection part is arranged to detect fluorescent light from said different fluorescent ions or tagged ions at different times attributable to physical differences between said different ions.

The detection part preferably includes optical means for collecting fluorescent light emitted in any one or more of a plurality of different direction from said ion(s) as they transverse the light sheet, and for directing the collected light to a photon detector.

The detection part may be arranged to form a plurality of separate said light sheets extending across a said path.

The detection part may include a plurality of separate detection areas each in communication with the ion conduit and each arranged to form a respective light sheet extending across a said path and each arranged to detect fluorescent light from fluorescent ion(s) or ion(s) tagged with fluorescent agents excited by interaction with the respective light sheet.

The apparatus may include a light source and a light-sheet optic for forming a said light sheet from light generated by the light source and the light source is a continuous wave laser or a light-emitting diode.

The detection part preferably includes a 2-dimensional photon detecting device arranged to record the position of detection of the fluorescent light within the light sheet. The 2-dimensional photon detecting device is arranged to record consecutive image frames at a frame rate higher than 100 frames per second.

The apparatus may include a pulsed ionization source or an ion gate arranged to generate charged particle packets.

The ion conduit may be arranged to separate said charged particle packets according to their velocities.

The ion conduit may be arranged at high vacuum such that a flight of a said charged particle packet through the ion conduit is substantially collision free; and wherein the ion conduit is arranged to be substantially free of electrical; particles entering the drift tube possess substantially the same kinetic energy, such that a flight time through the ion conduit may be assigned to the a mass of the particles.

The ion conduit may be arranged to provide quadrupolar field with characteristics such that ions of certain mass-to-charge ratio are dispersed and removed from the ion conduit while selected ions pass successfully through the conduit and arrive at the light sheet, thereby generating photons and registering a signal. The quadrupolar field may be scanned to sequentially allow ions of different selected mass-to-charge ratio to pass, thus generating a mass spectrum.

The ion conduit may be arranged at an elevated pressure by a buffer gas such that a substantial amount of collision occurs between charged particles and the buffer gas molecules; and wherein the ion conduit is arranged to generate an electrical field applied along its axis; such that flight times across the ion conduit may be assigned to a mobility of the particles. The apparatus may comprise means to establish a periodic motion of said ions in accordance with a property of the ion (e.g. mass or size), and means to establish the period of said periodic motion of said ions according to said detections by the detection part.

### BRIEF DESCRIPTION OF THE DRAWINGS

**FIG. 1** shows an example of a protein with fluorescent derivatizing agents and an example protein complex with cross-link agents with fluorescent groups.

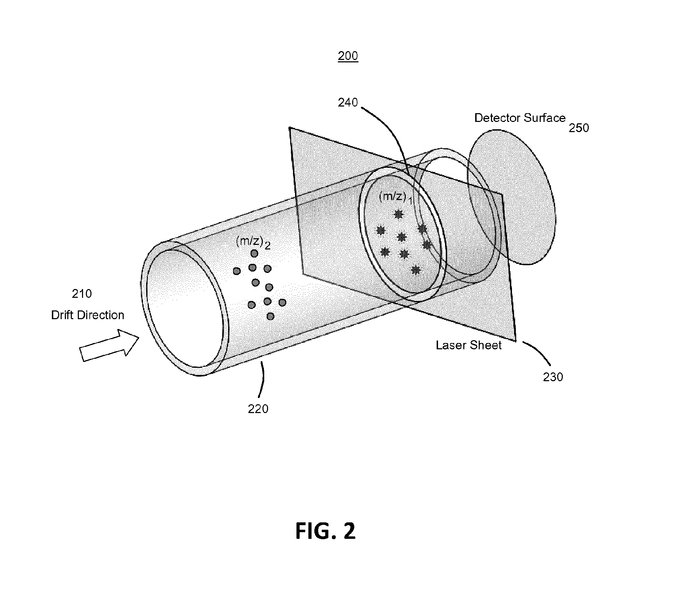

**FIG. 2** shows a laser light sheet forming a plane perpendicular to the direction of a field-free region or a drift-tube where ions are separated in time. Ions separated in time cross the plane sequentially to absorb and emit radiation collected on a photon detector.

**FIG. 3** shows a preferred instrument embodiment showing ionization source, transfer optics and mass or ion mobility analysis performed in a drift region where the far end is determined by light sheet and multi-pole photon detectors.

**FIG. 4** shows a fluorescence time-of-flight (TOF) detection system with two lasers operated at different wavelengths.

**FIG. 5** shows a fluorescence TOF detection system with multiple detection planes.

**FIG. 6** shows a coaxial multi-pass TOF mass analyser employing two fluorescence detection systems for Fourier transform mass spectrometry experiments.

**FIG. 7** shows a multi-turn TOF mass analyser employing a plurality of fluorescence detection systems for Fourier transform mass spectrometry experiments.

**FIG. 8** shows a mass spectrometer apparatus incorporating a low pressure ion mobility spectrometer and TOF mass analyser in series both equipped with fluorescence detection methods.

### DETAILED DESCRIPTION

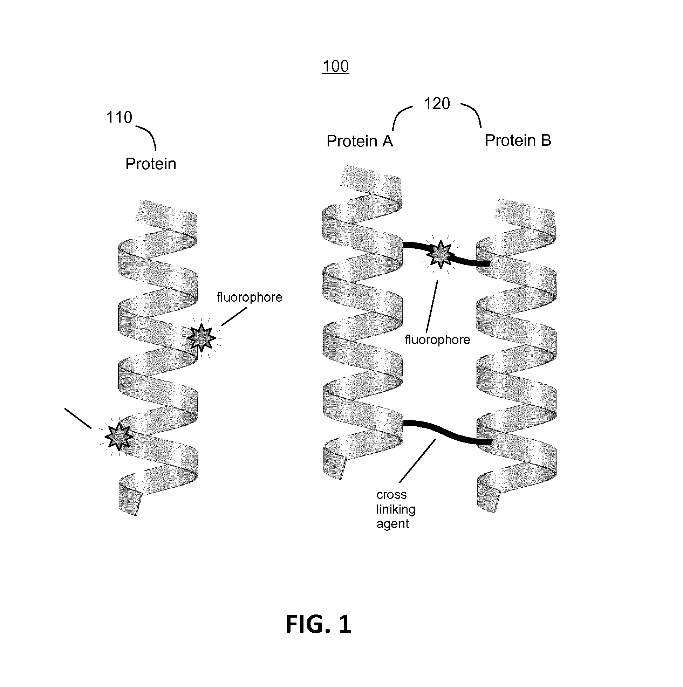

Figure 1 **100** shows a protein molecule in a form of a helix to which are attached two fluorophores **110** capable of emitting fluorescent light if exited by radiation at specific wavelengths. Ideally the decay of the excited state of the fluorophore is completed within a few ns.

In a preferred embodiment of the present invention the derivatized molecular species are ionized using "soft" ionization methods, for example Matrix-Assisted Laser Desorption Ionization (MALDI) or Electrospray Ionization (ESI) or variations of the above to prevent metastable or decay or dissociation of non-covalent complexes. It is also be desirable to use scaffolding agents chemically modified to incorporate fluorophores. Figure 1 also shows a protein complex in a form of two helices connecting through a series of cross linking reagents specifically modified to incorporate fluorophore molecules **120.** Fluorescent reagents can also be attached to specific aminoacids of the protein complex. The process of tagging proteins or any other polymer chains including mixtures of different species is performed by mixing the target sample in solution with the solution containing specifically designed fluorophores. Following a predetermined period for the species to react in solution the sample can be ionized using any of the soft ionization methods and subsequently analysed using mass spectrometry and/or ion mobility platforms or combinations of both.

In a preferred embodiment of the present invention **200** the method for ion separation consists of accelerating ions to a terminal velocity followed by injection into a drift region **220** where separation is accomplished either by differences in mass-to-charge (m/z) ratio or by differences in cross section.

A drift region may comprise a field-free region maintained at high vacuum conditions, preferably below 10⁻⁵ torr where the mean free path of the ions is at least comparable to the length of the field-free region and collisions with residual gas molecules should have no effect on the ion motion. In this mode of operation ions are separated based on the principles of a time-of-flight (TOF) mass analyzer. Heavier ions are accelerated to lower velocities and exhibit longer flight times to reach the detection plane 1 **230.** The starting pulse for a TOF experiment is either produced by voltage pulses applied to electrodes for ejecting ions in the field-free region or laser pulses used for ionization on surfaces.

In other embodiments of the invention, the drift tube **220** is operated at elevated pressure and configured to produce a uniform accelerating electric field, for example within a pressure range of 100 torr to 10⁻³ torr. Across this range of pressures ions experience frequent collisions with buffer gas molecules and drift according to their ion mobility. In contrast to a time-of-flight mass analyzer where ions are separated according to their m/z ratios, here separation is based on differences in collision cross section and the number of charges on the ion, which partly determine the interaction potential with the buffer gas molecules. The interaction between ions and buffer gas molecules determines the drift velocity for a particular species, also known as the terminal velocity. The terminal velocity differs for species with differences in the interaction potential thus producing a time-of-flight spectrum or mobility spectrum at the end of the drift region. Ion mobility drift tubes ions are typically injected into the drift region by a Bradbury-Nielsen (BN) gate.

Conventional methods of detection are based primarily on directing ions against conversion dynode surfaces **250** and determined their flight time by producing secondary electrons, which are then amplified to produce a fast analogue pulse. Conversely, a novel approach according to the present invention employs ions modified to incorporate a fluorescent molecule directed to cross a plane containing a thin sheet of laser light **230** formed e.g. using cylindrical mirrors or other necessary light optical elements. The thickness of the light sheet where ions are directed to cross is of the order of a mm or fraction thereof.

For example, the thickness of the light sheet at the relevant location may be in the range of about 0.01mm to 5mm, or more preferably about 0.05mm to about 2mm, or yet more preferably about 0.05mm to about 0.5mm, or even more preferably about 0.05mm to 0.2mm (e.g. about 0.1 mm). The light sheet may be formed by directing a laser beam into an optic comprising a cylindrical lens, in a direction substantially perpendicular to the cylindrical axis of the lens. Alternatively, the optic may comprise a plano-convex converging lens arranged coaxially with a plano-concave diverging cylindrical lens located within the focal length of the plano-convex lens. A light sheet is formed at the planar output side of the diverging lens, from the laser beam input to the convex input side of the converging lens. Alternatively, the optic may comprise a first plano-convex converging lens arranged coaxially with a second plano-convex diverging cylindrical lens located beyond the focal length of the first plano-convex lens. A light sheet is formed at the planar output side of the second converging lens, from the laser beam input to the convex input side of the first converging lens. Other optical arrangements such as would be readily apparent to the skilled person may be employed in the optics such as one or more cylindrical mirrors arranged perpendicular to the laser beam, or non-linear diffractive optics designed to generate line patterns.

Ions separated along the drift tube cross the light sheet sequentially absorbing and emitting photons **260.** The photons are then captured by a photomultiplier. An analogue electrical pulse similar to the pulse produced by conventional discrete dynode or multi-channel plate detectors is now initiated by a photon burst from each packet of ions crossing the light sheet.

A photomultiplier may be employed to produce a time-of-flight spectrum. The power or intensity of the photon burst caused by fluorescence is substantially proportional to the number of fluorophores attached to the ions, therefore detection efficiency is expected to enhance with molecular size or number sites specific to accept fluorescent tags. This is in contrast to conventional methods based on the generation of secondary electrons where detection efficiency drops exponentially with mass size. In another preferred embodiment of the present invention a Charge-Coupled Device (CCD) or other solid-state device or imager can be used to detect the photon burst to obtain a spatially resolved image of the ion beam or the ion packets crossing the drift region. Time- and spatially resolved experiments are also possible using appropriate detection methods.

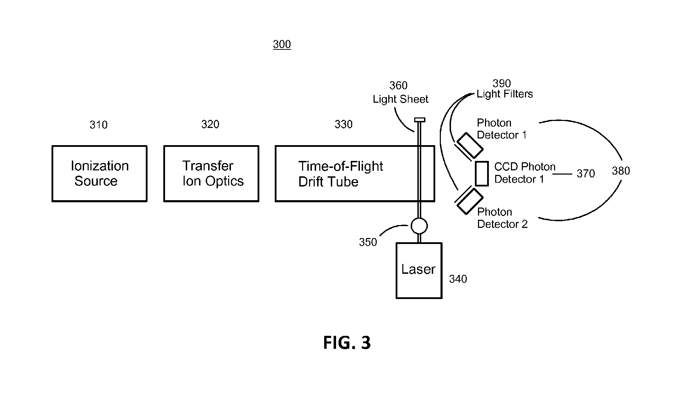

A preferred embodiment of a mass spectrometer of the present invention **300** is described with reference to Figure 3. The mass spectrometer consists of an ionization source **310,** transfer ion optics **320** and the TOF mass analyzer **330.** The ionization source is preferably selected from a list of "soft" ionization methods including MALDI and ESI. A MALDI source is preferably operated at high vacuum conditions and ions produced by the laser pulse are injected into an ion trap through a high vacuum lens for vibrational and translational thermalization (e.g. cooling). Mass analysis can be performed by axial injection of ions into a TOF mass analyser. Other instrument configurations are envisaged where the MALDI target plate is incorporated into the ion trap or ions formed on the target surface are injected directly into the TOF system through a high-vacuum lens. For atmospheric pressure ionization source **310** including ESI the transfer ion optics **320** may constitute a series of Radio-Frequency (RF) ion guides, including ion funnels, octapoles or other types of RF-multipole devices disposed over consecutive regions of progressively reduced pressure. For example an ion funnel maybe be disposed in the fore vacuum region of the mass spectrometer at pressure above 1 mbar while RF-multipole systems are disposed is consecutive regions at a pressure ranging from 0.1 mbar to 10⁻⁵ mbar. An orthogonal TOF mass analyser appears more compatible with this particular instrument design.

Another preferred embodiment of an ion mobility spectrometer of the present invention also described with reference to Figure 3 comprises an ionization source **310,** including MALDI and ESI, followed by electrostatic or RF ion optics **320** to direct ions toward a BN gate releasing pulses of ions into a drift tube **330.** The drift path may be defined by an elongated drift tube consisting of a long electrode stack to form a uniform electrical field across. Variations to this standard ion mobility spectrometer may include two or more drift tubes arranged in series for tandem experiments or circular drift regions to produce a longer flight path within reasonable physical dimensions. Tandem ion mobility spectrometry experiments are particularly favoured since the fluorescent method of detection is non-destructive and ions can be detected in every step of ion mobility analysis. It is important to emphasize that species will be detected using the fluorescence detection methods even if they are neutralised in the drift area, which maybe the result of energetic collisions with buffer gas molecules.

Figure 3 also shows the ion detection method preferably but not exclusively performed using a single laser sheet **360** and multiple photon detectors **370.** Preferably, a sheet of light is generated by means of a light source **340** and appropriate light optics **350** to define the end plane of the drift area **360,** as shown in Figure 3. The end-plane of the field-free region is substantially perpendicular to the principal ion drift direction. The light source **340** can be a lamp or a laser. The laser can be continuous wave (CW) or pulsed (timed to coincide with ions of interest). In one preferred embodiment the light source **340** may be a CW diode laser emitting at violet or UV wavelengths or wavelength appropriately chosen to maximise fluorescent emission from target ions to improve sensitivity. The light from the light source may be manipulated by classical or diffractive optics and formed into a wide and thin sheet. The thickness of the light sheet is preferably kept to a minimum so that the TOF detection plane is well defined. As the species carrying the fluorescent groups pass through the light sheet they are expected to absorb light and consequently emit at the fluorescence wavelength. The emitted light is then detected by appropriate light detection means **380** (photomultiplier, photodiodes, photodiode arrays, etc.) and recorded as a detection signal at the acquisition apparatus. The time-of-flight from the start of the experiment to the detection of the fluorescence events can be translated to mass or cross-section, depending on the type of analyzer used. Appropriate optical apparatus may be employed to collect light from multiple directions and deliver it to the light sensing device, e.g. a set of mirrors or a waveguide.

The wavelength of the fluorescent light may differ from the wavelength of the incident light sheet (primary light beam). In this case the means for detecting the fluorescent photons may be equipped with a band pass filter **390** that blocks the primary light beam and allows the fluorescent light beam to pass through. A system of photomultipliers equipped with band pass filters is shown in Figure 3. In another embodiment of the current invention there may be two or more different fluorescent agents utilised in the sample preparation process, designed to emit at different wavelengths. In such case the detector may be equipped with multiple light sensing devices each equipped with an appropriate narrow band pass filter **390** to differentiate time arrivals of the respective sample constituents. Alternatively a monochromator or similar light separating device may be employed. Using this method, similar or identical molecules can be simultaneously but independently identified and relatively quantified in a single experiment. In practical terms, isophorms or isomers can be treated with different fluorescent dyes and differentiated even if arrival times are very similar. In another method, a standard control sample can be treated with a different fluorescent agent to avoid interference with the unknown sample in the detection phase.

In the case where no band pass filter is utilised, the primary light beam is preferably carefully prevented from reaching the light detection means. This can be achieved using light screens, a light absorbing medium or other optical methods.

The time interval between light absorption and fluorescence light emission is an important parameter. In general short half-life fluorescent transitions (compared to the time of flight through the light sheet) are preferable. A single species passing through the light sheet may have time to absorb and emit several photons. This will result to broadening of the detection signal for a single species. Additionally, if a narrow packet of identical species passes through the light sheet, different individual species of the packet may emit at different times; this will also result to broadening of the detection signal for a single sample species. It is therefore preferable that the thickness of the light sheet is kept low, as, together with the fluorescence time constant, are the two most important determinants of detection peak broadening.

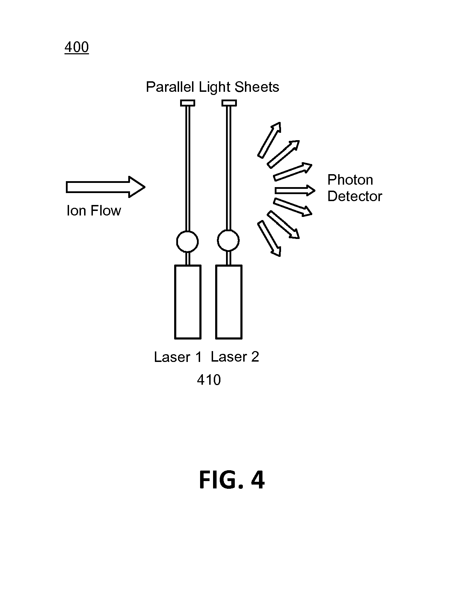

In contrast to the above, in the case when the initial sample containing the analyte is simple, e.g. the sample is purified and/or there is a single species or multiple species with adequate mass differences are to be measured, a broad arrival time peak can be further analysed and its leading and trailing edges of the acquired signal (which correspond to the measured sample entering and exiting the detection region respectively), can be used to improve the accuracy of the measurement. In another embodiment, a single CW laser light source can be treated with diffractive or non-linear optics to produce a multiple line pattern, defining a number of parallel light sheets - measurement planes. Alternatively **400,** multiple laser **410** or other light sources may be used to generate multiple light sheets, as shown in Figure 4. Every time a species passes through each one of the detection planes it will emit one or more fluorescence photon. As a single species passes though the multiplicity of measurement planes it will emit a series of signals with a time difference related to the species velocity. The multiple signals may be mathematically deconvoluted using appropriate algorithms, so that overall sensitivity is enhanced. Additionally, the peak shapes resulting from each measurement plane may be utilised to improve statistical significance and improve accuracy.

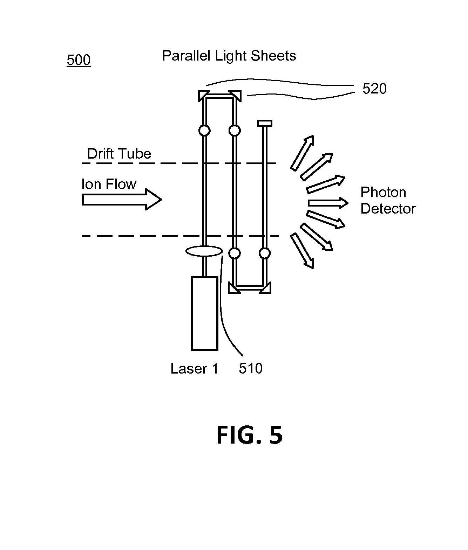

In another preferred embodiment diffractive optics can be employed to generate a line pattern with adequate width to cover the area of the detection plane. In an alternative embodiment **500** a plurality of conventional lenses **510,** mirrors **520** or beam splitters could be used, at least one of them being cylindrical, as shown in Figure 5.

In another application of embodiment **300,** light detection is performed by a light sensing array detector e.g. a CCD or CMOS device **370** with appropriate shutter speed or other position and time sensitive light detection devices. The light sensing array detector may be equipped by appropriate optics that can focus the image of the whole detection plane onto the array light detector. The output of such a device would include the position where a species is found in the detection plane as well as the arrival time. This information can be used to determine the position of the detected species in the ion source, assuming that ion optics with stigmatic focusing properties are employed. In another embodiment of the aforementioned device, a dual measurement plane is generated by means of diffractive or conventional optics. A light sensing array detector may be employed which is focused to monitor the second plane. The first plane is surveyed by a light sensing device with fast response, e.g. a photodiode or a photon multiplier. Signal from species that pass through the first detection plane can be used to trigger the shutter of the light sensing array so that it captures the images of fluorescing ions as they pass through the second detection plane.

In another embodiment a set of multiple detection planes as described previously can coincide with a non-zero electric field area to affect flight time of charged species. Such device could measure the charge state of detected species by determining the effect of the electric field in time-of-flight between consecutive detection planes.

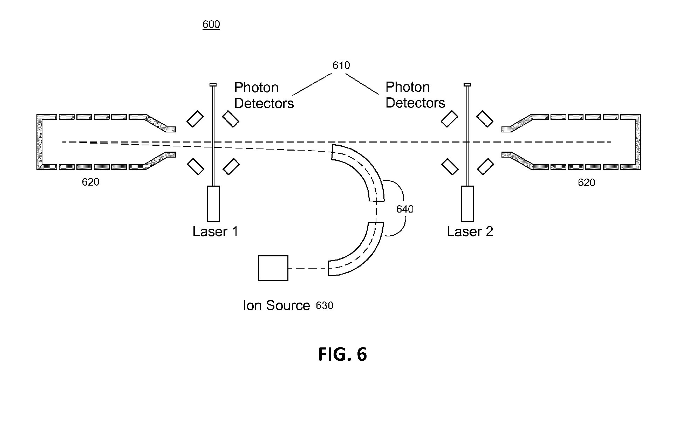

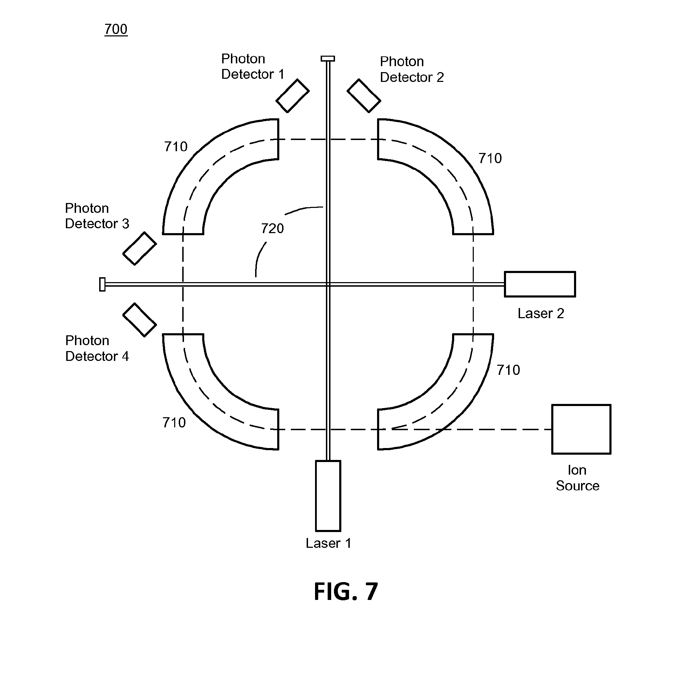

In another embodiment **600,** ions are forced to undergo periodic oscillations through two or more light detection planes **610.** The periodic ion motion is mass-to-charge ratio or collision cross section dependent. The resulting signal collected by the detectors can be analysed using Fourier transform algorithms and, given an adequate number of passes, will reveal with high accuracy the period of the ion motion. The period can be designated to the mass-to-charge ratio or the collision cross section of the molecules with high accuracy. In a preferred embodiment **600** ions would be trapped between two coaxial reflectrons **620,** as shown in Figure 6, or in a multi-turn TOF **700** comprised of multiple electric sectors **710** with at least two detection planes **720** formed in the field-free region and perpendicular to the ion path, as shown in Figure 7. The coaxial TOF system, also referred to as multi-pass TOF mass analyser, is equipped with an ion source **630,** preferably an RF storage trap for trapping and manipulating ions and ejecting those ions into the TOF analyser through a system of electrostatic sectors **640.** Other types of multi-pass TOF systems known to those skilled in the art of mass spectrometry are envisaged and may be readily to perform high-mass ion analysis based on the fluorescent detection methods disclosed in the present invention. The detection method can be performed using a typical time-of-flight experiment or based on oscillatory ion motion and Fourier transform methods. In a multi-turn TOF system multiple detection planes may be employed (2 or 4) in the field-free region established between sectors to accelerate the measurement hence improve mass resolving power.

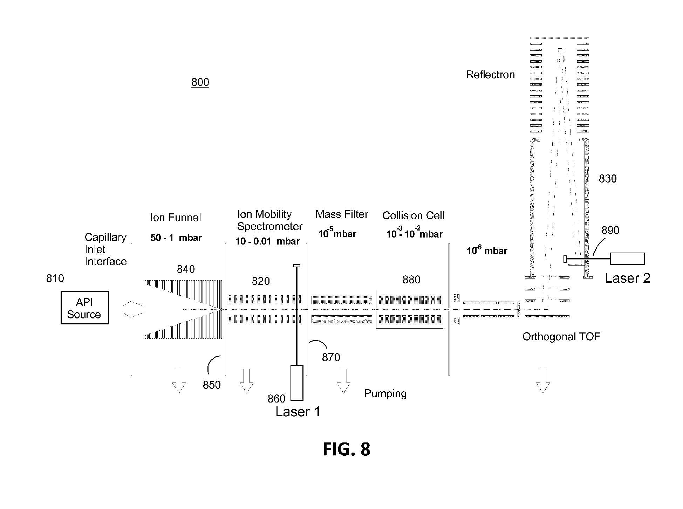

In yet another preferred embodiment a hybrid analytical apparatus **800** is disclosed incorporating an ion mobility spectrometer **820** and a mass spectrometer **830** in series. With reference to Figure 8 the device is equipped with an atmospheric pressure ionization source **810** to generate ions which are subsequently sampled by a temperature controlled capillary inlet and transferred into the fore vacuum region. An ion funnel **840** is disposed in the fore vacuum and operated at pressures from 1 mbar to 50 mbar. Ions are focused through a narrow aperture in a subsequent vacuum region at lower pressure enclosing an ion mobility spectrometer **820** equipped with a BN gate **850** to affect periodic injections of ion pulses into the drift region, a fluorescent light detector system **860** for measuring the flight time from the BN gate to the light sheet and preferably a second BN gate **870** to selectively transit ions into the subsequent vacuum region equipped with a quadrupole mass filter and a collision cell. Finally mass analysis of high mass precursor ions and/or fragment ions is performed using an orthogonal acceleration TOF mass analyser **830** with a configured to accept a second light sheet to form a second fluorescent detection scheme **890** for the determination of mass-to-charge ratio. The method of detection disclosed in the present invention maybe combined with conventional methods of detection for high mass ions, for example using post-acceleration techniques for high ion impact energy or cryogenic conversion dynode surfaces.

## Claims

1. A method of detecting a position of an ion(s) comprising:
providing a fluorescent said ion(s) or attaching a fluorescent agent to said ion(s) to provide a tagged ion(s);
providing an ion conduit for directing ions along a path and a detection area in communication with the ion conduit comprising a light sheet extending across a said path;
releasing said ion(s) or tagged ion(s) into the ion conduit to move therealong towards the detection area;
detecting fluorescent light from the fluorescent ion(s) or the tagged ion(s) excited by interaction with the light sheet, thereby to detect a position of the ion(s) as being a position of or within the light sheet.

2. A method according to any preceding claim including:
releasing different said fluorescent ions or tagged ions into the ion conduit;
causing physically different ions move therealong at different respective speeds according to their respective mass and/or size thereby to separate different ions within the drift tube accordingly;
detecting fluorescent light from said different fluorescent ions or tagged ions at different times; and,
determining physical differences between said different ions according to said different times.

3. Apparatus for detecting a position of an ion(s) comprising:
an ion conduit part for directing ions along a path;
a detection part including a detection area in communication with the ion conduit and arranged to form a light sheet extending across a said path for detecting fluorescent light from fluorescent ion(s) or ion(s) tagged with fluorescent agents excited by interaction with the light sheet, thereby to detect a position of the ion(s) as being a position of or within the light sheet;
an ion source part for releasing fluorescent ion(s) or tagged ion(s) into the ion conduit to move therealong towards the detection area.

4. Apparatus according to claim 3 in which the ion conduit part is arranged to cause physically different ions move therealong at different respective speeds according to their respective mass and/or size thereby to separate different ions within the drift tube accordingly; and said detection part is arranged to detect fluorescent light from said different fluorescent ions or tagged ions at different times attributable to physical differences between said different ions.

5. Apparatus according to any of claims 3 and 4 in which the detection part includes optical means for collecting fluorescent light emitted in any one or more of a plurality of different direction from said ion(s) as they transverse the light sheet, and for directing the collected light to a photon detector.

6. Apparatus according to any of claims 3 to 5 wherein said detection part is arranged to form a plurality of separate said light sheets extending across a said path.

7. Apparatus according to any of claims 3 to 6 wherein said detection part includes a plurality of separate detection areas each in communication with the ion conduit and each arranged to form a respective light sheet extending across a said path and each arranged to detect fluorescent light from fluorescent ion(s) or ion(s) tagged with fluorescent agents excited by interaction with the respective light sheet.

8. Apparatus according to any of claims 3 to 7 including a light source and a light-sheet optic for forming a said light sheet from light generated by the light source and the light source is a continuous wave laser or a light-emitting diode.

9. Apparatus according to any of claims 3 to 8 in which the detection part includes a 2-dimensional photon detecting device arranged to record the position of detection of the fluorescent light within the light sheet, wherein said 2-dimensional photon detecting device is arranged to record consecutive image frames at a frame rate higher than 100 frames per second.

10. Apparatus according to any of claims 3 to 9 in which:
the ion conduit is arranged to provide quadrupolar field with characteristics such that ions of an un-selected mass-to-charge ratio are dispersed or removed from the ion conduit while ions of a selected mass-to-charge ratio pass successfully through the ion conduit;
wherein said ion conduit is arranged such that said ions of a selected mass-to-charge ratio are directed to the detection part for interaction with said light sheet to fluoresce; and,
wherein said ion guide is arranged to control said quadrupolar field to sequentially allow different mass-to-charge ions to pass successfully through the ion conduit,

11. Apparatus according to any of claims 3 to 10 including a pulsed ionization source or an ion gate arranged to generate charged particle packets.

12. Apparatus according to claim 11 wherein the ion conduit is arranged to separate said charged particle packets according to their velocities.

13. Apparatus according to any of claims 3 to 12 wherein:
the ion conduit is arranged at high vacuum such that a flight of a said charged particle packet through the ion conduit is substantially collision free;
and wherein the ion conduit is arranged to be substantially free of electrical;
particles entering the drift tube possess substantially the same kinetic energy,
such that a flight time through the ion conduit may be assigned to the a mass of the particles.

14. Apparatus according to and of claims 3 to 12 wherein:
the ion conduit is arranged at an elevated pressure by a buffer gas such that a substantial amount of collision occurs between charged particles and the buffer gas molecules;
and wherein the ion conduit is arranged to generate an electrical field applied along its axis;
such that flight times across the ion conduit may be assigned to a mobility of the particles.

15. Apparatus according to any of claims 3 to14 comprising:
means to establish a periodic motion of said ions in accordance with a property of the ion (e.g. mass or size);
means to establish the period of said periodic motion of said ions according to said detections by the detection part.
